# FASCICULE DE BREVET EUROPEEN

(11) **EP 3 574 316 B1**
(45) Date de publication et mention de la délivrance du brevet: **06.10.2021**
(21) Numéro de dépôt: 18702782.6
(22) Date de dépôt: 23.01.2018
(51) Int. Cl.: G01N 29/04, G01N 29/11, G01N 29/22, G01N 29/24, G01N 29/265, G01N 29/48

(54) **PROCEDE ET DISPOSITIF DE CONTROLE DE PIECES PAR ULTRASONS MULTIELEMENTS**
MULTIELEMENTVERFAHREN UND VORRICHTUNG ZUM PRÜFEN VON BAUTEILEN MIT ULTRASCHALL
MULTIELEMENT METHOD AND DEVICE FOR TESTING PARTS WITH ULTRASOUND

(30) Priorité: 25.01.2017 FR 1750585
(43) Date de publication de la demande: 04.12.2019
(73) Titulaire: Safran, 75015 Paris (FR); Centre National de la Recherche Scientifique, 75016 Paris (FR); Ecole Supérieure de Physique et de Chimie Industrielles de la Ville de Paris, 75005 Paris (FR)
(72) Inventeur: BAELDE, Aurélien, 77550 Moissy-Cramayel (FR); JENSON, Frédéric, 77550 Moissy-Cramayel (FR); FINK, Mathias, 92190 Meudon (FR); LAURENT, Jérôme, 75018 Paris (FR); PRADA, Claire, 75006 Paris (FR)
(74) Mandataire: Gevers & Orès
(86) Numéro de dépôt international: PCT/FR2018/050154
(87) Numéro de publication internationale: WO 2018/138430

(56) Documents cités:
- WO-A1-2005/068995
- CN-A- 104 280 455
- US-B2- 9 488 573
- LOBKIS O I ET AL: "Ultrasonic backscattering in polycrystals with elongated single phase and duplex microstructures", ULTRASONICS, vol. 52, no. 6, 1 janvier 2012 (2012-01-01), pages 694-705, XP028923585, ISSN: 0041-624X, DOI: 10.1016/J.ULTRAS.2011.12.002
- THOMPSON R B ET AL: "Scattering of elastic waves in simple and complex polycrystals", WAVE MOTION, NORTH-HOLLAND, AMSTERDAM, NL, vol. 45, no. 5, 1 avril 2008 (2008-04-01), pages 655-674, XP022603837, ISSN: 0165-2125, DOI: 10.1016/J.WAVEMOTI.2007.09.008 [extrait le 2007-10-17]

## Description

### Arrière-plan de l'invention

La présente invention se rapporte au domaine général des transducteurs ultrasonores à éléments multiples. En particulier, la présente invention s'applique au contrôle non-destructif de pièces comprenant une microstructure allongée.

Dans le domaine de l'aéronautique, il est important de contrôler l'intégrité de pièces forgées destinées à être montées dans un aéronef. Ces pièces sont constituées d'un matériau, par exemple du titane ou un alliage de titane, comportant une structure cristalline et une microstructure. Par définition, la structure cristalline d'une pièce définit la structure de cette pièce à une échelle de l'ordre d'un dixième de nanomètre. La microstructure d'une pièce définit la structure de cette pièce à une échelle comprise entre un nanomètre et un centimètre.

La structure cristalline d'une pièce est contrôlée à l'aide de méthodes reposant sur la diffraction d'ondes électromagnétiques, par exemple la diffraction de rayons X. La microstructure d'une pièce est contrôlée à l'aide de méthodes reposant sur la réflexion, sur la diffusion, et/ou sur la rétrodiffusion d'ondes acoustiques, par exemple des ultrasons.

Ainsi, il est connu des procédés de contrôle par ultrasons destinés à détecter des défauts dans une pièce. Un défaut peut comprendre, par exemple, des laminages situés entre deux couches formant la pièce, ou encore des discontinuités surfaciques ou volumiques de ladite pièce. Ces procédés consistent à produire un faisceau ultrasonore en direction d'une pièce à contrôler, et à analyser les signaux réfléchis, diffusés et rétrodiffusés par les défauts situés dans cette pièce.

Des procédés connus de contrôle par ultrasons utilisent une pluralité de transducteurs ultrasonores, configurés pour détecter des défauts situés à différentes profondeurs d'une pièce. Le document F. J. Margetan, J. Umbach, R. Roberts et al., « Inspection Development for Titanium Forgings », NTIS, 2007 propose ainsi plusieurs types de transducteurs ultrasonores de géométrie annulaire ou sectorielle, déposables sur la surface de la pièce à contrôler.

Le document WO 2005/06895 décrit une méthode et un appareil pour examiner le matériau à l'intérieur d'un objet en utilisant la réflexion ou la diffraction d'ultrasons.

Le document US9488573 B2 décrit un système d'imagerie d'un objet utilisant des ondes acousto-électromagnétiques pour étudier les propriétés physiques d'un objet.

Le document CN104280455 A décrit une méthode de détection de défauts dans une pièce en utilisant la diffusion d'ultrasons.

Cependant, ces procédés et ces dispositifs ne permettent pas de détecter une microstructure allongée se situant dans une pièce à contrôler.

En effet, une pièce à contrôler peut comprendre une ou plusieurs microstructures allongées. C'est le cas notamment de pièces réalisées à partir d'une billette cylindrique en titane ou en alliage de titane. Lors de la réalisation de ces pièces, par exemple lors d'un forgeage, une ou plusieurs microstructures allongées se forment dans ces pièces.

Or, un inconvénient d'une pièce comprenant une microstructure allongée est que, lors d'un contrôle de cette pièce par un faisceau ultrasonore, la rétrodiffusion du faisceau ultrasonore avec cette microstructure allongée produit un bruit, dit bruit de structure. Ce bruit de structure interfère avec les signaux issus de la réflexion, de la diffusion et/ou de la rétrodiffusion du faisceau ultrasonore par les défauts situés dans la pièce, et masque une partie des signaux mesurés lors d'un contrôle de la pièce.

Cet inconvénient est d'autant plus notable lorsque la pièce à contrôler comporte une forme complexe ou une structure interne anisotrope. C'est notamment le cas de pièces de forme axisymétrique, ou de pièces réalisées en matériaux métalliques forgés en titane, ou en alliage de titane.

De manière surprenante, les inventeurs ont montré que l'amplitude du bruit de structure dépend de la position relative et de l'orientation relative du transducteur ultrasonore utilisé pour contrôler la pièce.

Par ailleurs, les inventeurs ont montré que la géométrie des transducteurs ultrasonores connus ne permet pas de détecter avec précision la présence d'une microstructure allongée se situant dans une pièce à contrôler.

### Objet et résumé de l'invention

Pour pallier les inconvénients susmentionnés, un objet de l'invention est de proposer un procédé de contrôle ultrasonore d'une pièce pour déterminer une direction d'allongement d'une microstructure allongée se situant dans une pièce.

Corrélativement, un autre objet de l'invention est de proposer un dispositif de contrôle ultrasonore d'une pièce, ledit dispositif étant configuré pour détecter et localiser avec précision des défauts et des microstructures allongées se situant dans une pièce.

Dans la présente description et les revendications annexées, l'expression « position » est utilisée pour désigner simultanément la localisation spatiale et l'orientation d'un élément dans l'espace. En particulier, l'homme de métier comprendra que la position d'un élément dans l'espace peut se définir à l'aide de six degrés de liberté (X, Y, Z, Ψ, θ, ϕ), les trois coordonnées (X, Y, Z) désignant la localisation spatiale de cet élément en coordonnées cartésiennes dans un repère orthonormé (X, Y, Z), et les trois angles (Ψ, θ, ϕ) désignant l'orientation de cet élément en coordonnées angulaires.

Un objet de l'invention est ainsi de proposer un procédé de contrôle non-destructif d'une pièce comprenant une microstructure allongée, ledit procédé étant caractérisé en ce qu'il comporte les étapes suivantes :
- déplacement d'un transducteur linéaire en une pluralité de positions situées en regard d'une surface de ladite pièce, ledit transducteur linéaire comprenant une pluralité d'éléments transducteurs alignés le long d'une direction principale dudit transducteur linéaire ;
- émission d'une pluralité de faisceaux ultrasonores élémentaires, chacun de ladite pluralité de faisceaux ultrasonores élémentaires étant émis par chacun de ladite pluralité d'éléments transducteurs en direction de ladite surface ;
- mesure d'une pluralité de signaux d'écho et d'une pluralité de bruits de structure, chacun de ladite pluralité de signaux d'écho et chacun de ladite pluralité de bruits de structure étant mesurés par chacun de ladite pluralité d'éléments transducteurs, chacun desdits signaux d'écho résultant de la rétrodiffusion des faisceaux ultrasonores élémentaires par un défaut sous la surface de la pièce, et chacun desdits bruits de structure résultant de la rétrodiffusion des faisceaux ultrasonores élémentaires par ladite microstructure allongée ;
- détermination d'une direction d'allongement de la microstructure allongée lorsqu'une amplitude de l'un parmi la pluralité des bruits de structure mesurés est minimale selon ladite pluralité de positions.

Avantageusement, ce procédé de contrôle permet de détecter et de localiser avec précision une microstructure allongée se situant dans une pièce.

Avantageusement, ce procédé de contrôle permet de contrôler une pièce en minimisant le bruit de structure généré par la rétrodiffusion de faisceaux ultrasonores avec une microstructure allongée dans une pièce.

Avantageusement, ce procédé de contrôle ne nécessite pas, avant sa mise en œuvre, de connaître la forme de la pièce.

Avantageusement, ce procédé de contrôle est simple à mettre en œuvre, efficace et économique.

Dans un mode particulier de réalisation de l'invention, ladite pluralité de faisceaux ultrasonores élémentaires émise en chacune de la pluralité de positions est focalisée pour former une région focale.

Dans un mode particulier de réalisation de l'invention, ladite direction d'allongement de la microstructure allongée est déterminée selon une direction parallèle à ladite direction principale.

Corrélativement, un objet de l'invention est de proposer un système de contrôle non-destructif d'une pièce comprenant une microstructure allongée, ledit système étant caractérisé en ce qu'il comporte :
- un transducteur linéaire, ledit transducteur linéaire comprenant une pluralité d'éléments transducteurs alignés le long d'une direction principale dudit transducteur linéaire, chaque élément transducteur de ladite pluralité d'éléments transducteurs étant apte à émettre un faisceau ultrasonore ;
- un dispositif de contrôle comportant :
   - des moyens de déplacement du transducteur linéaire en une pluralité de positions situées en regard d'une surface de ladite pièce ;
   - des moyens d'émission d'une pluralité de faisceaux ultrasonores élémentaires, chacun de ladite pluralité de faisceaux ultrasonores élémentaires étant émis par chacun de ladite pluralité d'éléments transducteurs en direction de ladite surface ; et
   - des moyens de mesure d'une pluralité de signaux d'écho et d'une pluralité de bruits de structure, chacun de ladite pluralité de signaux d'écho et chacun de ladite pluralité de bruits de structure étant mesurés par chacun de ladite pluralité d'éléments transducteurs, chacun desdits signaux d'écho résultant de la rétrodiffusion des faisceaux ultrasonores élémentaires par un défaut sous la surface de la pièce, et chacun desdits bruits de structure résultant de la rétrodiffusion des faisceaux ultrasonores élémentaires par ladite microstructure allongée ;
   - des moyens de détermination d'une direction d'allongement de la microstructure allongée lorsqu'une amplitude de l'un parmi la pluralité des bruits de structure mesurés est minimale selon ladite pluralité de positions.

Avantageusement, ce système de contrôle permet de contrôler efficacement et rapidement une pièce, ladite pièce comprenant des défauts et des microstructures allongées.

Dans un mode particulier de réalisation de l'invention, ladite pluralité d'éléments transducteurs présente une forme sensiblement rectangulaire comprenant une grande dimension et une petite dimension, lesdits éléments transducteurs étant disposés de manière contiguë les uns par rapport aux autres le long de la grande dimension.

Dans un mode particulier de réalisation de l'invention, lesdits moyens d'émission comprennent des moyens de focalisation pour focaliser ladite pluralité de faisceaux ultrasonores élémentaires émise en chacune de la pluralité de positions pour former une région focale.

Dans un mode particulier de réalisation de l'invention, chacun de ladite pluralité d'éléments transducteurs comprend une lentille de préfocalisation disposée le long de la grande dimension.

Dans un mode particulier de réalisation de l'invention, lesdits moyens de déplacement sont configurés pour déplacer ledit transducteur linéaire en translation le long de trois axes orthogonaux et en rotation autour de trois axes orthogonaux.

Dans un mode particulier de réalisation de l'invention, la fréquence d'émission de chacun de ladite pluralité d'éléments transducteurs est supérieure ou égale à 1 MHz et inférieure ou égale à 20 MHz.

Dans un mode particulier de réalisation de l'invention, le nombre d'éléments transducteurs est choisi parmi : 16, 64, 96, ou 128.

Dans un mode particulier de réalisation de l'invention, la grande dimension et la petite dimension de chacun de ladite pluralité d'éléments transducteurs sont égales à 10 mm et à 0.4 mm, respectivement.

### Brève description des dessins

Dans la suite de la description, on adoptera par convention et à titre non limitatif, des orientations longitudinale, transversale et verticale en référence au trièdre (X, Y, Z) représenté sur les figures. La direction verticale est utilisée à titre de référence géométrique sans rapport avec la direction de la gravité terrestre.

L'invention et ses caractéristiques techniques seront mieux comprises à la lecture de la description qui suit, accompagnée de plusieurs figures représentant :
- les **figures 1a** et **1b****,** respectivement, plusieurs vues schématiques de profil d'un procédé de contrôle non-destructif d'une pièce selon un mode de réalisation de l'invention ;
- les **figures 2a** et **2b****,** respectivement, plusieurs vues schématiques en perspective d'un procédé de contrôle non-destructif d'une pièce selon un mode de réalisation de l'invention ;
- la **figure 3****,** sous forme d'organigramme, un exemple d'étapes d'un procédé de contrôle non-destructif d'une pièce selon un mode de réalisation de l'invention ;
- les **figures 4a** et **4b****,** respectivement, une vue schématique en vue de dessus d'un procédé de contrôle non-destructif d'une pièce à l'aide d'un transducteur linéaire déplacé en une première position et une évolution temporelle de l'amplitude d'un bruit de structure mesuré par ce transducteur linéaire en cette première position selon un mode de réalisation de l'invention ;
- les **figures 5a** et **5b****,** respectivement, une vue schématique en vue de dessus d'un procédé de contrôle non-destructif d'une pièce à l'aide d'un transducteur linéaire déplacé en une deuxième position et une évolution temporelle de l'amplitude d'un bruit de structure mesuré par ce transducteur linéaire en cette deuxième position selon un mode de réalisation de l'invention ;
- les **figures 6a, 6b** et **6c****,** respectivement, une vue en section dans un plan XY, une vue en section dans un plan XZ et une vue en section dans un plan YZ d'un transducteur linéaire utilisé pour mettre en œuvre un mode de réalisation de l'invention ;
- la **figure 7****,** sous forme d'organigramme, un exemple de moyens utilisés pour mettre en œuvre un dispositif de contrôle non-destructif d'une pièce selon un mode de réalisation de l'invention;
- la **figure 8****,** une vue schématique en perspective d'un transducteur linéaire utilisé pour mettre en œuvre un mode de réalisation de l'invention.

Naturellement, pour satisfaire des besoins spécifiques, une personne compétente dans le domaine de la technique pourra appliquer des modifications dans la description suivante. Bien qu'elle se réfère à différents modes de réalisation, la présente invention n'est pas limitée à ces modes de réalisation spécifiques, et toutes modifications propres au champ d'application de la présente invention peuvent être considérées comme évidentes pour une personne versée dans l'art de la technique correspondant.

### Description détaillée d'un mode de réalisation

Dans la suite de la description, des éléments présentant une conception ou des fonctions identiques, similaires ou analogues seront désignés par une même référence.

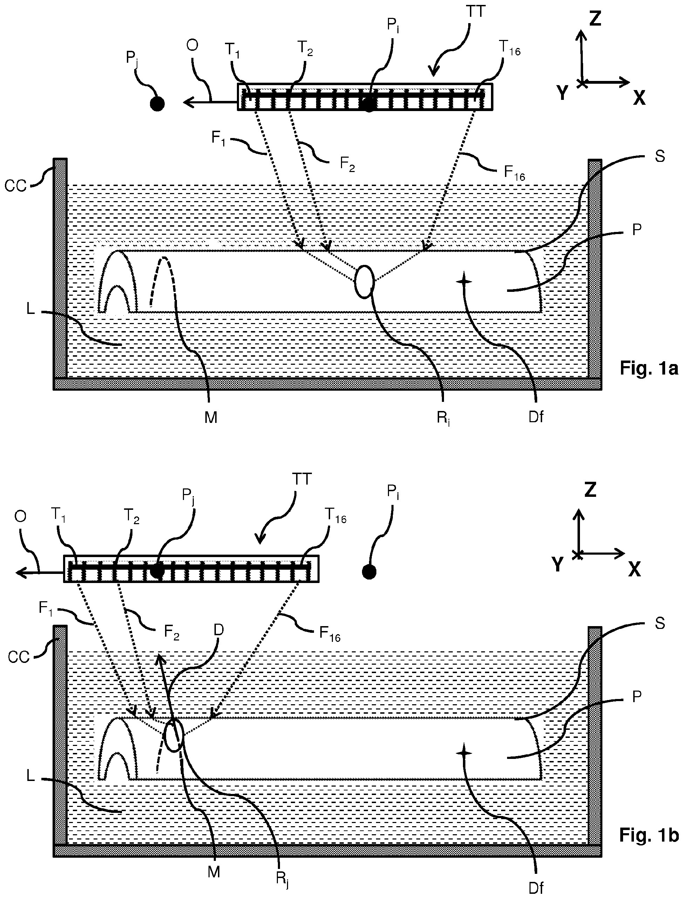

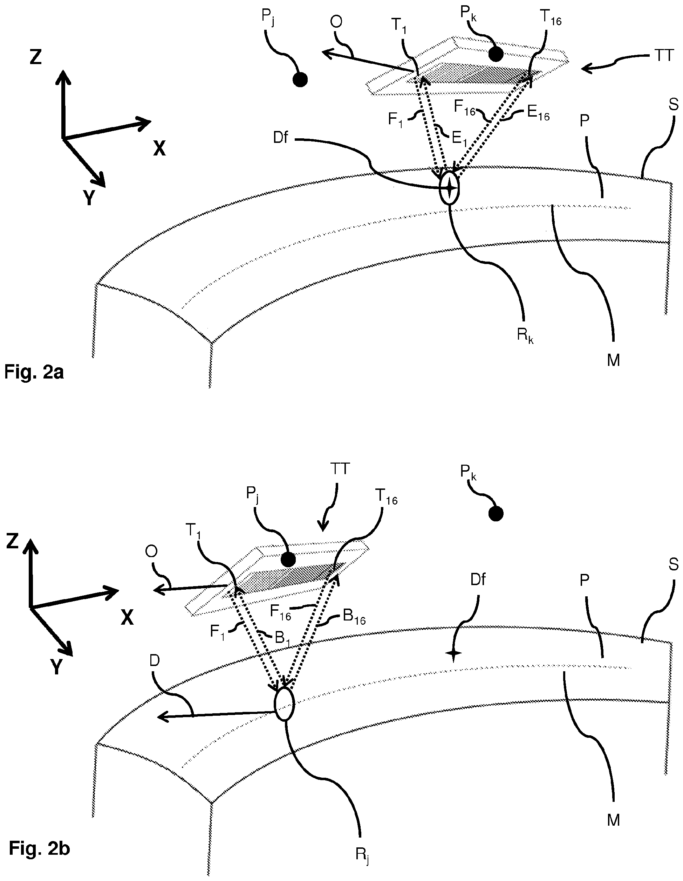

Les **figures 1a, 1b****,** **2a** et **2b** représentent des vues schématiques d'un procédé de contrôle non-destructif d'une pièce **P** à l'aide d'un transducteur linéaire **TT** selon un mode de réalisation de l'invention. Dans les exemples représentés, la pièce **P** comprend une microstructure **M** allongée et un défaut **Df** qui se situent sous une surface **S** de ladite pièce **P.** En outre, la pièce **P** est une billette forgée en titane, de forme cylindrique, qui comporte une structure interne anisotrope donnant lieu à une microstructure **M** allongée le long d'une direction **D.**

De manière non limitative, la pièce **P** peut être tout type de pièce, de forme et de composition quelconques. Par exemple, la pièce **P** peut être une pièce métallique, une pièce en matériau composite comprenant des fibres métalliques, ou encore une pièce comprenant un renforcement unidirectionnel orienté le long d'une direction. Selon d'autres exemples, la pièce **P** peut être une pièce de forme axisymétrique, un solide de révolution, ou encore une pièce de forme symétrique.

Sur les **figures 1a** et **1b****,** la pièce **P** est immergée dans un liquide **L,** par exemple de l'eau contenue dans une cuve **CC.** Cette configuration permet de mettre en œuvre un procédé de contrôle ultrasonore en immersion de la pièce **P,** à l'aide d'un transducteur linéaire **TT** positionné à distance de la pièce **P.**

En variante, un procédé de contrôle selon un autre mode de réalisation de l'invention peut être appliqué en l'absence de liquide **L.** Pour mettre en œuvre un procédé de contrôle ultrasonore de la pièce **P** sans réaliser d'immersion, un transducteur linéaire **TT** peut être déposé directement sur une surface **S** de la pièce P.

En variante, un transducteur linéaire **TT** peut être déposé sur une surface **S** de la pièce **P** via un relais, par exemple un polymère thermoplastique ou un polymère transparent, tel que du plexiglas. Un couplant, par exemple un gel composite ou une huile lubrifiante, peut aussi être placé entre le transducteur linéaire **TT** et la surface **S** de la pièce **P** pour faciliter le déplacement du transducteur linéaire **TT** entre deux positions.

En variante, un transducteur linéaire **TT** peut être placé et déplacé à distance d'une surface **S** de la pièce **P,** sans utiliser de liquide **L.** Un contrôle de la pièce **P** peut notamment être réalisé dans l'air, sans utiliser de couplant.

Selon un mode de réalisation de l'invention, le transducteur linéaire **TT** est un transducteur acoustique comprenant une pluralité d'éléments transducteurs **{T₁, T₂**, **..., Tₙ}**. Le transducteur linéaire **TT** comprend un nombre entier **n** d'éléments transducteurs.

Selon un mode de réalisation de l'invention, le nombre **n** d'éléments transducteurs est choisi parmi : 16, 64, 96, ou 128. De manière non limitative, les figures illustrent un exemple de transducteur linéaire **TT** comprenant 16 éléments transducteurs, soit à définir **n** comme étant égal à 16.

Les éléments transducteurs **{T₁, T₂**, ..., **Tₙ}** sont disposés le long d'une direction principale **O** du transducteur linéaire **TT.** La direction de la direction principale **O** définit la direction d'orientation dudit transducteur linéaire **TT** dans le référentiel **(X, Y, Z).**

Selon un mode de réalisation de l'invention, le transducteur linéaire **TT** est adapté pour être déplacé en translation selon trois premiers axes orthogonaux. Par exemple, lesdits trois premiers axes orthogonaux peuvent correspondre aux direction du référentiel **(X, Y, Z).** En outre, le transducteur linéaire **TT** est adapté pour être déplacé en rotation selon trois autres axes orthogonaux. Par exemple, et de manière non limitative, lesdits trois autres axes orthogonaux sont parallèles auxdits trois premiers axes orthogonaux.

Selon un mode de réalisation de l'invention, le transducteur linéaire **TT** est déplaçable en translation le long de la direction longitudinale **X,** de la direction transversale **Y** et/ou de la direction verticale **Z.** En outre, le transducteur linéaire **TT** peut être déplacé en rotation autour d'un axe de roulis **AΨ,** autour d'un axe de tangage **Aθ,** et/ou autour d'un axe de lacet **Aϕ** pouvant être parallèle à la direction **Z.** Sur les figures, l'axe de roulis **Aψ** est identique à la direction longitudinale **X,** l'axe de tangage **Aθ** est identique à la direction transversale **Y,** et l'axe de lacet **Aϕ** est identique à la direction verticale **Z.**

Selon un mode de réalisation de l'invention, chacun desdits éléments transducteurs **{T₁, T₂**, ..., **Tₙ}** comprend un élément piézoélectrique, par exemple un résonateur piézoélectrique, qui est placé à l'intérieur ou sur l'une des surfaces du transducteur linéaire **TT.**

Chacun des éléments transducteurs **{T₁, T₂**, ..., **Tₙ}** est apte à vibrer et à émettre une onde acoustique, en particulier un faisceau ultrasonore, lorsque ledit élément piézoélectrique est soumis à une impulsion électrique. Ainsi, le transducteur linéaire **TT** est configuré pour générer des faisceaux ultrasonores à partir d'éléments transducteurs excitables électriquement, et indépendamment les uns des autres. Les faisceaux ultrasonores élémentaires peuvent comprendre des ondes planes, des ondes sphériques, ou encore tout type d'ondes adaptées au contrôle d'une pièce par ultrasons.

Selon un mode de réalisation de l'invention, chacun desdits éléments transducteurs **{T₁, T₂**, ..., **Tₙ}** est configuré pour émettre un faisceau ultrasonore élémentaire en direction d'une surface **S** d'une pièce **P.** A chaque élément transducteur correspond ainsi l'émission d'un faisceau ultrasonore élémentaire. A l'élément transducteur **T₁** correspond l'émission d'un faisceau ultrasonore élémentaire **F₁**, à l'élément transducteur **T₂** correspond l'émission d'un faisceau ultrasonore élémentaire **F₂**; et ainsi de suite jusqu'à l'émission d'un faisceau élémentaire **F₁₆** par un dernier élément transducteur **T₁₆**.

Selon un mode de réalisation de l'invention, la fréquence d'émission des faisceaux ultrasonores élémentaires **{F₁, F₂, ..., Fₙ}** peut être choisie dans une gamme comprise entre 20 kHz et 20 MHz. En particulier, la fréquence d'émission des faisceaux ultrasonores élémentaires **{F₁, F₂,** ..., **Fₙ}** peut être choisie comme étant supérieure ou égale à 1 MHZ et inférieure ou égale à 20 MHz.

Selon un mode de réalisation de l'invention, la fréquence d'émission des faisceaux ultrasonores élémentaires **{F₁, F₂,** ..., **Fₙ}** de chacun de la pluralité d'éléments transducteurs **{T₁, T₂**, ...,**Tₙ**}, est choisie dans une gamme permettant d'avoir une résolution suffisante des signaux mesurés par ceux-ci.

Selon un mode de réalisation de l'invention, l'émission de faisceaux élémentaires **{F₁**, **F₂,** ..., **Fₙ}** par les éléments transducteurs **{T₁, T₂**, ..., peut s'effectuer de manière successive ou de manière simultanée.

Selon un mode de réalisation de l'invention, les faisceaux ultrasonores élémentaires peuvent être focalisés à l'aide de l'application d'une loi de retard ou de plusieurs lois de retard. Cette loi de retard, ou ces lois de retard, permettent de diriger lesdits faisceaux ultrasonores élémentaires **{F₁, F₂,** ..., **Fₙ}** de manière spécifique dans la pièce **P.**

En particulier, une mise en forme dynamique des faisceaux ultrasonores peut être réalisée en appliquant des retards aux signaux électriques utilisés pour exciter chaque élément transducteur. Le choix de retards adaptés permet ainsi de modifier les caractéristiques des faisceaux ultrasonores émis, notamment leur direction ou leur orientation.

Sur la **figure 1a****,** un transducteur linéaire **TT** est placé en une position **Pᵢ.** La position **Pᵢ** est une position choisie parmi une pluralité de positions **{P₁, P₂, ..., Pₘ}** situées en regard d'une surface **S** de la pièce et en lesquelles le transducteur linéaire **TT** est déplaçable.

En cette position **Pᵢ**, la position du transducteur linéaire **TT** est définie par six coordonnées **(Xᵢ, Yᵢ, Zᵢ, Ψᵢ, θᵢ**, **ϕᵢ**), les trois coordonnées **Xᵢ, Yᵢ** et **Zᵢ** localisant la position spatiale **Pᵢ** du transducteur linéaire **TT** dans l'espace défini par les trois directions du repère orthonormé **(X, Y, Z),** et les trois coordonnées angulaires **Ψᵢ θᵢ** et **ϕᵢ** localisant l'orientation angulaire du transducteur linéaire **TT** par rapport à trois directions orthogonales, éventuellement parallèles aux directions dudit repère orthonormé **(X, Y, Z).**

Sur la **figure 1b****,** le transducteur linéaire **TT** est déplacé en une autre position **Pⱼ**, différente de la position **Pᵢ.** On comprendra que le transducteur linéaire **TT** est déplaçable en un nombre **m** de positions parmi la pluralité de positions **{P₁, P₂,** ..., **Pₘ}.** Selon les applications faites d'un mode de réalisation de la présente invention, le nombre **m** de positions peut être choisi entre 1 et 10000, et est de préférence égal à 100. Par exemple, le transducteur linéaire **TT** peut être déplacé en rotation sur un intervalle de 180°. La précision obtenue d'une mesure effectuée sur cet intervalle sera donc égal à 180° divisé par la valeur de **m.**

Selon un mode de réalisation de l'invention, les éléments transducteurs **{T₁, T₂**, ..., **Tₙ**} sont configurés pour être simultanément émetteurs et récepteurs de signaux.

Selon un mode de réalisation de l'invention, chacun des éléments transducteurs **{T₁, T₂**, ...,**Tₙ**} est configuré pour émettre un faisceau élémentaire et recevoir un signal d'écho ou un bruit de structure. Plusieurs transducteurs linéaires peuvent être utilisés simultanément. En outre, les éléments transducteurs d'au moins un transducteur linéaire **TT** peuvent être utilisés en tant qu'émetteurs, tandis que des éléments transducteurs d'au moins un autre transducteur linéaire peuvent être utilisés pour mesurer des signaux d'écho ou des bruits de structure.

En variante, différentes configurations peuvent être utilisées pour la mise en œuvre d'un mode de réalisation de l'invention : une configuration en transmission pour laquelle un transducteur émetteur et un transducteur récepteur sont placés de part et d'autre de la pièce **P** à contrôler ; une configuration en mode tandem pour laquelle un transducteur émetteur et un transducteur récepteur sont placés l'un devant l'autre, ou encore une configuration pour laquelle un transducteur linéaire émetteur et un transducteur linéaire récepteur sont disposés côte à côte et en regard d'une surface **S** de la pièce **P.**

Ainsi, les éléments transducteurs peuvent mesurer, en une position choisie parmi une pluralité de positions **{P₁, P₂,** ..., **Pₘ},** un signal d'écho donné parmi une pluralité de signaux **{E₁, E₂, ..., Eₘ}** d'écho, et/ou un bruit de structure parmi une pluralité de bruits **{B₁, B₂, ..., Bₘ}** de structure. Les signaux **{E₁, E₂, ..., Eₙ}** d'écho mesurés définissent des signatures d'un défaut **Df** rencontré par les faisceaux ultrasonores élémentaires **{F₁, F₂, ..., Fₙ}.**

Selon un mode de réalisation de l'invention, la pluralité de faisceaux ultrasonores élémentaires est focalisée pour former une région focale. Sur la **figure 1a****,** le transducteur linéaire **TT** est placé en la position **Pᵢ,** et les faisceaux ultrasonores élémentaires émis **{F₁, F₂,** ..., **Fₙ}** sont focalisés pour former une région focale **Rᵢ.** Sur la **figure 1b****,** le transducteur linéaire **TT** est déplacé en la position **Pᵢ**, et les faisceaux ultrasonores élémentaires émis **{F₁, F₂,** ..., **Fₙ}** sont focalisés pour former une région focale **Rⱼ.**

Selon un mode de réalisation de l'invention, la position de chaque région focale peut être modifiée en focalisant chaque faisceau élémentaire en une position de focalisation, et selon une orientation choisie. Pour ce faire, une focalisation précise des faisceaux ultrasonores élémentaires **{F₁, F₂,** ..., **Fₙ}** peut être obtenue en soumettant chaque élément transducteur du transducteur linéaire **TT** à un signal électrique retardé par rapport aux autres éléments piézoélectriques.

Selon un mode de réalisation de l'invention, la focalisation de chaque faisceau ultrasonore élémentaires peut être modifiée en modifiant la loi de retard appliquée à chacun des éléments transducteurs.

Ainsi, l'application de différents lois de retard aux signaux électriques appliqués aux éléments transducteurs **{T₁, T₂**, ...**Tₙ**}, permet de réaliser un contrôle en profondeur de la pièce **P.** Cette mise en forme dynamique du faisceau ultrasonore permet de modifier les caractéristiques du faisceau ultrasonore émis par chaque élément transducteur, et donc de réaliser précisément la focalisation du faisceau en une région focale **Rᵢ** correspondant à la position **Pᵢ** du transducteur linéaire **TT.**

Par déplacement du transducteur linéaire **TT** parmi la pluralité de positions **{P₁, P₂,** ..., **Pₘ},** il est ainsi possible de former une pluralité de régions focales {**R₁**, **R₂, ..., Rₘ}** à l'intérieur desquelles la présence d'une microstructure **M** allongée peut être déterminée, ou encore la présence d'un défaut **Df** de la pièce **P.**

Sur la figure **2a****,** un transducteur linéaire **TT** comprenant **n** éléments transducteurs **{T₁, T₂**, ..., **Tₙ**}, par exemple 16 éléments transducteurs, est déplacé en une position **Pₖ.** Les faisceaux ultrasonores élémentaires **{F₁, F₂,** ..., **Fₙ}** forment une région focale **Rₖ** qui comprend un défaut **Df** situé sous la surface **S** de la pièce **P.**

Selon un mode de réalisation de l'invention, chacun des éléments transducteurs **{T₁, T₂**,...,**Tₙ**}, est configuré pour recevoir et mesurer un signal d'écho résultant de la rétrodiffusion d'un faisceau ultrasonore élémentaire par un défaut **Df** situé sous une surface **S** de la pièce **P.** Par exemple, suivant l'émission d'un faisceau ultrasonore élémentaire **F₁**, l'élément transducteur **T₁** mesure un signal **E₁** d'écho résultant de la rétrodiffusion dudit faisceau ultrasonore élémentaire **F₁** avec le défaut **Df.** De même, suivant l'émission d'un faisceau ultrasonore élémentaire **F₁₆** tel qu'illustré, l'élément transducteur **T₁₆** mesure un signal **E₁₆** d'écho résultant de la rétrodiffusion de **F₁₆** avec le défaut **Df.**

Sur la figure **2b**, le transducteur linéaire **TT** est déplacé en une position **Pⱼ.** Les faisceaux ultrasonores élémentaires **{F₁, F₂,** ..., **Fₙ}** forment une région focale **Rⱼ** qui comprend une partie de la microstructure **M** allongée située sous la surface **S** de la pièce **P.**

Selon un mode de réalisation de l'invention, chacun des éléments transducteurs **{T₁, T₂**, ...**Tₙ**}, est configuré pour recevoir et mesurer un bruit de structure résultant de la rétrodiffusion d'un faisceau ultrasonore élémentaire par une microstructure **M** allongée située sous la surface **S** de la pièce **P.** Successivement à l'émission d'un faisceau ultrasonore élémentaire **F₁**, l'élément transducteur **T₁** mesure un bruit **B₁** de structure résultant de la rétrodiffusion dudit faisceau ultrasonore élémentaire **F₁** avec la microstructure **M** allongée. De même, suivant l'émission d'un faisceau ultrasonore élémentaire **F₁₆** tel qu'illustré, l'élément transducteur **T₁₆** mesure un bruit **B₁₆** de structure résultant de la rétrodiffusion de **F₁₆** avec la microstructure **M** allongée.

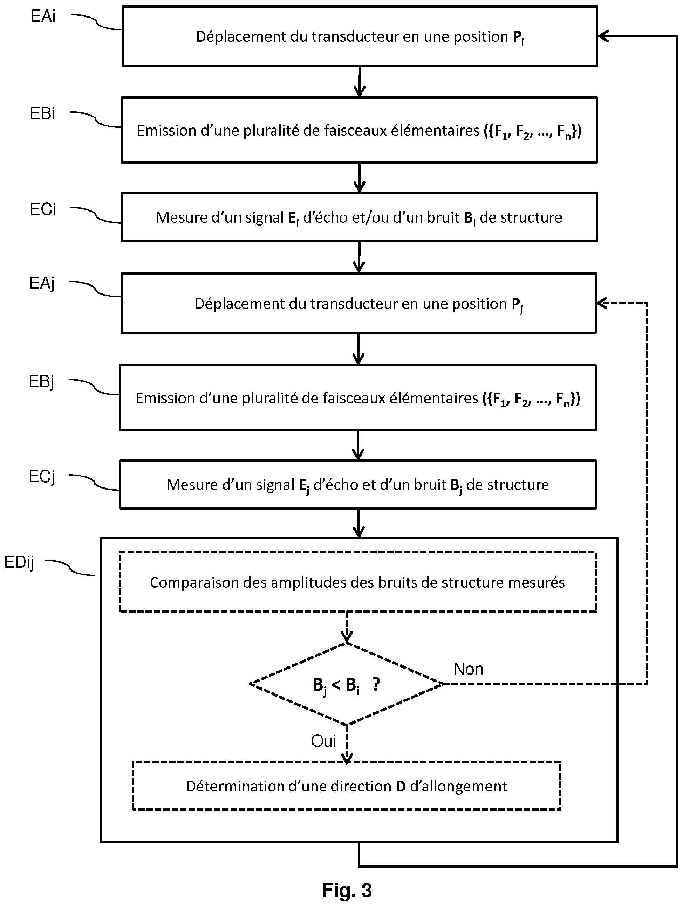

En référence à la **figure 3****,** on décrit ici les étapes d'un procédé de contrôle non-destructif d'une pièce **P** comprenant une microstructure **M** allongée selon un mode de réalisation de l'invention.

Ledit procédé de contrôle comprend une étape **EAi,** dite étape de déplacement en une position **Pᵢ** de coordonnées **(Xᵢ, Yᵢ, Z_{¡}, Ψᵢ, θᵢ, ϕᵢ)** choisie parmi la pluralité de positions **{P₁, P₂,** ..., **Pₘ}** où le transducteur linéaire **TT** est déplacé.

Lorsque le transducteur linéaire **TT** est déplacé en la position **Pᵢ,** le procédé de contrôle met en œuvre une étape **EBi,** dite étape d'émission en la position **Pᵢ,** au cours de laquelle chacun des éléments transducteurs **{T₁, T₂**, ...,**Tₙ**} émet un faisceau ultrasonore élémentaire en direction de la surface **S.**

Successivement à l'étape **EBi,** le procédé de contrôle met en œuvre une étape **ECi,** dite étape de mesure en la position **Pᵢ,** au cours de laquelle chacun des éléments transducteurs **{T₁, T₂**, ...,**Tₙ**}, mesure un signal **Eᵢ** d'écho et/ou un bruit **Bᵢ** de structure.

Successivement à l'étape **ECi,** le procédé de contrôle met en œuvre une étape **EAj,** dite étape de déplacement en la position **Pᵢ**, au cours de laquelle le transducteur **TT** est déplacé depuis la position **Pᵢ** jusqu'en la position **Pᵢ**, de coordonnées **(Xⱼ, Yⱼ, Zⱼ, Ψⱼ, θⱼ, ϕⱼ).** Cette position **Pⱼ** est choisie parmi la pluralité de positions **{P₁, P₂,** ..., **Pₘ},** et diffère de la position **Pᵢ** en ce qu'au moins l'une des coordonnées **(Xⱼ, Yⱼ, Zⱼ, Ψⱼ, θᵢ, ϕᵢ)** de la position **Pⱼ** diffère de l'une des coordonnées **(Xᵢ, Yᵢ, Zᵢ, Ψᵢ θᵢ, ϕᵢ)** de la position **Pᵢ**. Par exemple, l'étape **EAj** peut consister à déplacer le transducteur linéaire **TT** selon la direction **X** par rapport à la position **Pᵢ**. En variante, ladite étape **EAj** peut consister à tourner le transducteur linéaire **TT** d'un angle **Ψ, θ,** ou **ϕ** par rapport à l'orientation du transducteur linaire **TT** en la position **Pᵢ.**

Lorsque le transducteur linéaire **TT** est déplacé en la position **Pⱼ**, le procédé de contrôle met en œuvre une étape **EBj,** dite étape d'émission en la position **Pⱼ**, au cours de laquelle chacun de ladite pluralité d'éléments transducteurs **{T₁, T₂**, ...,**Tₙ**}, émet à nouveau un faisceau ultrasonore élémentaire en direction de la surface **S.**

Successivement à l'étape **EBj,** le procédé de contrôle met en œuvre une étape **ECj,** dite étape de mesure en la position **Pⱼ**, au cours de laquelle chacun de ladite pluralité d'éléments transducteurs **{T₁, T₂**, ..., **Tₙ}** mesure un signal **Eⱼ** d'écho et/ou un bruit **Bⱼ** de structure.

Au terme de l'étape **ECj,** le procédé de contrôle a ainsi permis de mesurer un signal **Eᵢ** d'écho et/ou un bruit **Bᵢ** de structure en la position **Pᵢ** et un signal **Eⱼ** d'écho et/ou un bruit **Bⱼ** de structure en la position **Pⱼ.**

Successivement à l'étape **ECj,** le procédé de contrôle met en œuvre une étape **EDij,** dite étape de comparaison entre la position **Pᵢ** et la position **Pⱼ**, pour comparer les amplitudes **Bᵢ** et **Bⱼ** des bruits de structure mesurés respectivement lors des étapes **ECi** et **ECj.**

Si l'amplitude du bruit de structure **Bⱼ** est supérieure à l'amplitude du bruit de structure **Bᵢ,** le procédé de contrôle remet en œuvre, successivement, les étapes **EAj, EBj, ECj** et **EDij.**

Si l'amplitude du bruit de structure **Bⱼ** est strictement inférieure à l'amplitude du bruit de structure **Bᵢ,** le procédé de contrôle détermine, en la position du transducteur linéaire **TT,** une direction **D** d'allongement de la microstructure **M** allongée. Ainsi, en analysant les signaux reçus par le transducteur linéaire **TT,** le procédé de contrôle permet de déterminer une direction **D** d'allongement d'une microstructure **M** allongée dans une pièce **P,** en identifiant les positions pour lesquelles l'amplitude du bruit de structure est minimale.

Selon un mode de réalisation de l'invention, la pluralité de faisceaux ultrasonores élémentaires **{F₁, F₂,** ..., **Fₙ}** émise en chacune de la pluralité de positions **{P₁, P₂,** ..., **Pₘ}** est focalisée pour former une région focale **{R₁, R₂, ..., Rₘ}.**

De manière surprenante, les inventeurs ont montré que le bruit de structure rétrodiffusé par une microstructure **M** allongée dans une pièce P est anisotrope. Il en découle que l'amplitude des signaux de bruits de structure mesurés par un transducteur linéaire **TT** en déplacement dans un plan orthogonal à la direction de la microstructure **M** allongée est beaucoup plus fluctuante que l'amplitude de signaux de bruits de structure mesurés par ce même transducteur linéaire **TT** en déplacement dans un plan contenant ladite direction de la microstructure **M** allongée.

Ainsi, la meilleure approximation d'une direction **D** d'allongement de la microstructure **M** allongée est déterminée comme étant parallèle à la direction principale **O** du transducteur linéaire **TT** lorsque l'amplitude du bruit de structure mesuré est minimale sur l'ensemble des positions **{P₁, P₂,** ..., **Pₘ}** en lesquelles ledit transducteur linéaire **TT** est déplacé. Selon un mode de réalisation de l'invention, la direction principale **O** peut être parallèle à la direction longitudinale **X** d'un référentiel **(X, Y, Z)** dont l'origine est située sur le transducteur linéaire **TT.**

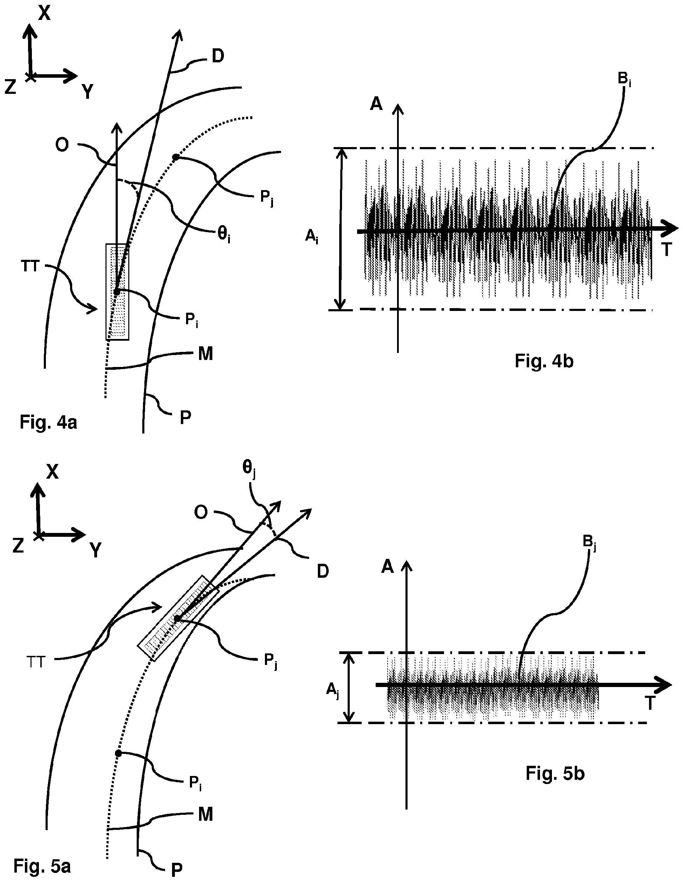

Les figures **4a, 4b, 5a** et **5b** illustrent la mise en œuvre de l'étape **EDij** pour déterminer une direction **D** d'allongement d'une microstructure **M** allongée dans la pièce **P.** Cette direction **D** d'allongement est déterminée lorsqu'une amplitude de l'un parmi la pluralité des bruits **{B₁, B₂,** ..., **Bₘ}** de structure mesurés est minimale en une position parmi la pluralité de positions **{P₁, P₂,** ..., **Pₘ}.** Ladite direction **D** d'allongement peut être déterminée de manière approximative, ou encore de manière itérative, en mettant œuvre les étapes **EAj, EBj, ECj** et **EDij** autant de fois que souhaité en déplaçant le transducteur linéaire **TT** parmi la pluralité de positions **{P₁, P₂, ..., Pₘ}.**

La **figure 4a** représente un transducteur linéaire **TT** déplacé en une première position **Pᵢ** selon un mode de réalisation de l'invention. En particulier, le transducteur linéaire **TT** et la pluralité d'éléments transducteurs **{T₁, T₂**, ...,**Tₙ**} est déplacée dans un plan parallèle au plan **XY** et passant par la première position **Pᵢ**. Cette première position **Pᵢ** se situe à la verticale d'une microstructure **M** allongée dans une pièce **P.** La direction principale **O** dudit transducteur linéaire **TT** n'est pas parallèle à la direction **D** d'allongement de la microstructure **M** allongée en la première position **Pᵢ.** Un angle **θᵢ** définissant l'angle entre la direction principale **O** et la direction **D** d'allongement en la première position **Pᵢ** est donc non-nul.

La **figure 4b** représente l'évolution de l'amplitude **A** d'un premier bruit **Bᵢ** de structure au cours du temps **T**, ledit premier bruit **Bᵢ** de structure étant la somme des bruits de structure mesurés par chacun de la pluralité d'éléments transducteurs **{T₁, T₂**, ...,**Tₙ**} lorsque le transducteur linéaire **TT** est déplacé en ladite première position **Pᵢ**. L'amplitude dudit premier bruit **Bᵢ** de structure mesuré est égale à **Aᵢ.**

Sur la **figure 5a****,** le transducteur linéaire **TT** est déplacé en une deuxième position **Pⱼ** selon un mode de réalisation de l'invention. En particulier, le transducteur linéaire **TT** est déplacé dans un plan parallèle au plan **XY** et passant par la deuxième position **Pⱼ.** Cette deuxième position **Pⱼ** se situe à la verticale d'une microstructure **M** allongée dans une pièce **P.** En la position **Pⱼ**, la direction principale **O** du transducteur linéaire **TT** n'est pas parallèle à la direction **D** d'allongement de la microstructure **M** allongée lorsque ledit transducteur linéaire **TT** était déplacé en la première position **Pᵢ**. L'angle **θⱼ** définissant l'angle entre ladite direction principale **O** et ladite direction **D** d'allongement en la deuxième position **Pⱼ** est non nul, et cet angle **θⱼ** est inférieur à l'angle **θᵢ**.

Par conséquent, la direction principale **O** dudit transducteur linéaire **TT** présente un parallélisme plus important avec la direction d'allongement **D** de la microstructure **M** allongée en la deuxième position **Pⱼ** qu'en la première position **Pᵢ**.

La **figure 5b** représente l'évolution de l'amplitude **A** d'un deuxième bruit **Bⱼ** de structure au cours du temps **T,** ledit premier bruit **Bⱼ** de structure étant la somme des bruits de structure mesurés par chacun de la pluralité d'éléments transducteurs **{T₁, T₂**, ...**Tₙ**}, lorsque le transducteur linéaire **TT** est déplacé en ladite deuxième position **Pⱼ.** L'amplitude dudit deuxième bruit **Bⱼ** de structure mesuré est égale à **Aᵢ.**

Lorsque l'étape **EDij** est mise en œuvre, le procédé de contrôle selon un mode de réalisation de l'invention compare les deux amplitudes **Aᵢ** et **Aⱼ.** Par comparaison avec la **figure 4b****,** ladite amplitude **Aⱼ** est inférieure à l'amplitude **Aᵢ** du premier bruit **Bᵢ** de structure mesuré.

Dans le cas où l'amplitude **Aⱼ** du bruit **Bⱼ** de structure est supérieure ou égale à l'amplitude **Aᵢ** du bruit **Bᵢ** de structure, ce qui correspond à la situation représentée sur les **figures 4a, 4b, 5a** et **5b****,** la direction principale **O** du transducteur linéaire **TT** déplacé en la deuxième position **Pⱼ** présente un parallélisme plus faible que lorsque ledit transducteur linéaire **TT** était déplacé en la première position **Pᵢ**. Dans ce cas, le transducteur est déplacé en une nouvelle position parmi la pluralité de positions **{P₁, P₂,** ..., **Pₘ},** par la répétition des étapes successives **EAj, EBj, ECj** et **EDij.**

Si l'amplitude **Aⱼ** du bruit **Bⱼ** de structure est inférieure à l'amplitude **Aᵢ** du bruit **Bᵢ** de structure, il en découle que la direction principale **O** du transducteur linéaire **TT** en la deuxième position **Pⱼ** présente un parallélisme plus grand que lorsque ledit transducteur linéaire **TT** était déplacé en la première position **Pᵢ**. Dans ce cas, la direction principale **O** du transducteur linéaire **TT** fournit une bonne approximation d'une direction **D** d'allongement de la microstructure **M** allongée.

Sur base de la réalisation de l'étape **EDij,** des déplacements du transducteur linéaire **TT** jusqu'en une position où l'amplitude de l'un parmi la pluralité des bruits **{B₁, B₂,** ..., **Bₘ}** de structure mesurés est minimale permet d'aligner la direction principale **O** dudit transducteur linéaire **TT** avec une direction **D** d'allongement de la microstructure **M** allongée. La connaissance de la direction principale **O** dudit transducteur linéaire **TT** permet alors d'en déduire la direction **D** d'allongement de la microstructure **M** allongée.

Selon un mode de réalisation de l'invention, le transducteur linéaire **TT** est déplacé uniquement en translation selon des positions choisies parmi la pluralité de positions **{P₁, P₂,** ..., **Pₘ}** jusqu'en une position optimale où l'amplitude de l'un parmi la pluralité des bruits **{B₁, B₂,** ..., **Bₘ}** de structure mesurés est minimale. Le transducteur linéaire **TT** est ensuite déplacé uniquement en rotation, par exemple sur un intervalle de 180°, jusqu'à ce que l'amplitude du bruit de structure mesuré soit minimale.

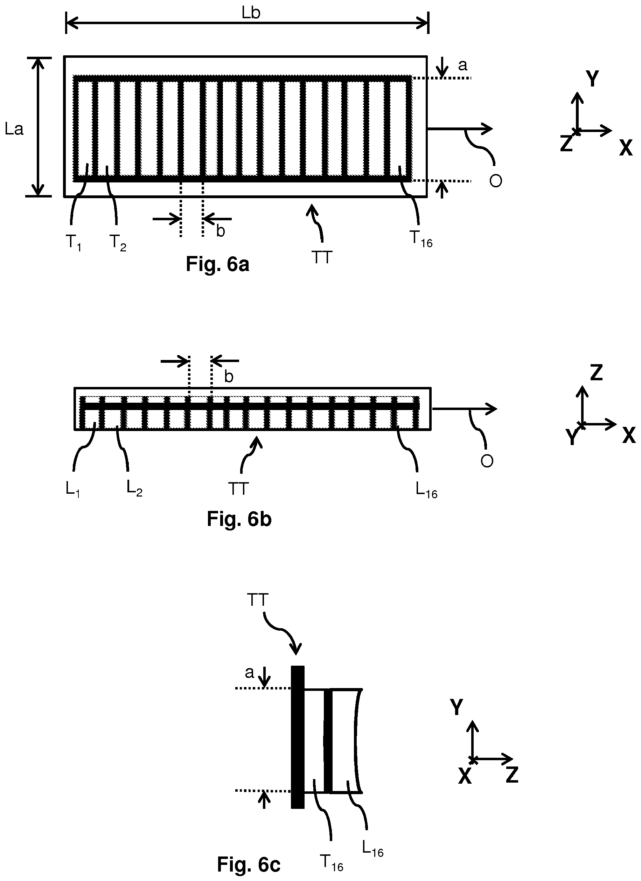

Les **figures 6a, 6b** et **6c** représentent des vues en section d'un transducteur linéaire **TT** utilisé pour mettre en œuvre un mode de réalisation de l'invention.

La **figure 6a** est une vue en section dudit transducteur linéaire **TT** dans un plan **XY.** Ce transducteur linéaire **TT** peut être utilisé dans un dispositif de contrôle pour mettre en œuvre l'invention, et comprend par exemple 16 éléments transducteurs **{T₁, T₂**, ..., **T₁₆}** disposés le long de la direction principale **O.**

Selon un mode de réalisation de l'invention, chacun des éléments transducteurs présente une forme rectangulaire comprenant une grande dimension **a** et une petite dimension **b,** lesdits éléments transducteurs étant disposés de manière contiguë les uns aux autres le long de la grande dimension **a.**

Sur la **figure 6a****,** la grande dimension **a** et la petite dimension **b** sont, respectivement, la longueur et la largeur de chaque élément transducteur dans le plan **XY.** Le transducteur linéaire **TT,** comprenant 16 éléments transducteurs **{T₁, T₂**, ..., **T₁₆},** présente donc également une forme rectangulaire, avec une longueur **La** et une largeur **Lb.** En particulier, la longueur **La** est la longueur du plus grand côté du transducteur linéaire **TT** dans le plan **XY,** et la largeur **Lb** est la longueur du plus petit côté du transducteur linéaire **TT** dans le plan **XY.**

Selon un mode de réalisation de l'invention, la grande dimension **a** et la petite dimension b de chacun de ladite pluralité d'éléments transducteurs **{T₁, T₂**, ...,**Tₙ**} sont égales à **10** mm et à **0.4** mm, respectivement.

Un dispositif non rectangulaire, par exemple un dispositif circulaire ou annulaire, ou encore un dispositif mono-éléments comprenant un seul élément transducteur, n'a pas de direction principale. De tels dispositifs sont donc différents du cas d'un transducteur linéaire **TT** présentant une forme rectangulaire est une direction principale **O.** Un dispositif non rectangulaire ou mono-éléments ne permet pas de déterminer la direction d'une microstructure **M** allongée dans une pièce **P.**

La **figure 6b** est une vue en section du transducteur linéaire **TT** dans un plan **XZ.** La **figure 6c** est une vue en section du transducteur linéaire **TT** dans un plan **YZ,** sur laquelle sont uniquement visibles l'élément transducteur **T₁₆** et une lentille de préfocalisation **L₁₆** disposée en contact avec l'élément transducteur **T₁₆.**

Selon un mode de réalisation de l'invention, chacun des éléments transducteurs **{T₁, T₂**, ..., **T₁₆}** comprend une lentille de préfocalisation disposée le long d'une grande dimension **a.** On comprendra qu'une lentille de préfocalisation parmi une pluralité de lentilles de préfocalisation **{L₁, L₂, ..., L₁₆}** est ainsi disposée sous chaque élément transducteur parmi la pluralité d'éléments transducteurs **{T₁, T₂**, ..., **T₁₆}**.

Selon un mode de réalisation, chaque lentille de préfocalisation permet de focaliser un faisceau ultrasonore élémentaire parmi ladite pluralité de faisceaux ultrasonores élémentaires **{F₁, F₂,** ..., **Fₙ}** pour former une région focale **{R₁, R₂,** ..., **Rₘ}** située sous une surface **S** de la pièce **P.**

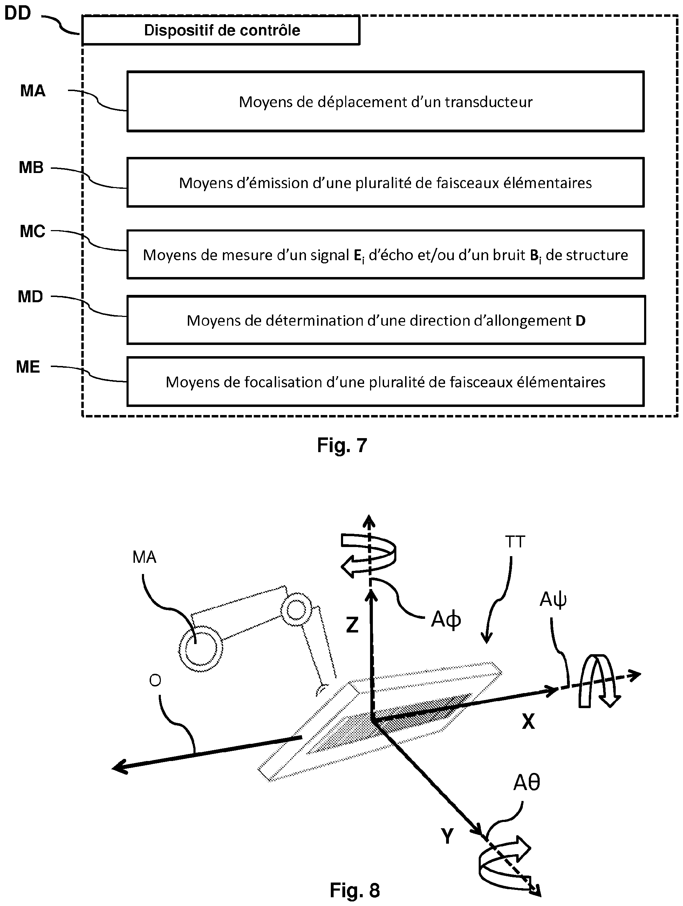

En référence à la **figure 7****,** l'invention vise également un dispositif **DD** de contrôle non-destructif d'une pièce **P** comprenant une microstructure **M** allongée.

Selon un mode de réalisation de l'invention, le dispositif **DD** comprend :
- des moyens de déplacement **MA,** comprenant par exemple un bras robotique ou un support mobile sur lequel est disposé un transducteur linéaire **TT,** et configurés pour mettre en œuvre les étapes **EAi** et **EAj** ;
- des moyens **MB** d'émission d'une pluralité de faisceaux ultrasonores élémentaires **{F₁, F₂,** ..., **Fₙ}**, comprenant par exemple des éléments transducteurs ou des capteurs piézoélectriques, et configurés pour mettre en œuvre les étapes **EBi** et **EBj** ;
- des moyens **MC** de mesure d'un signal **Eᵢ** d'écho et/ou d'un bruit **Bᵢ** de structure, comprenant par exemple lesdits éléments transducteurs ou lesdits capteurs piézoélectriques des moyens **MB** d'émission, et configurés pour mettre en œuvre les étapes **ECi** et **ECj** ;
- des moyens **MD** de détermination d'une direction **D** d'allongement d'une microstructure **M** allongée, comprenant par exemple un système de traitement de l'information un périphérique, un micro-ordinateur, un poste de travail ou encore un terminal mobile de télécommunication, et configurés pour mettre en œuvre l'étape **EDij.**

Selon un mode de réalisation de l'invention, les moyens **MD** de détermination sont configurés pour traiter les signaux détectés par chacun des éléments transducteurs **{T₁, T₂**, ..., **Tₙ}**, et pour comparer ces signaux détectés avec d'autres signaux, ou des signaux de référence.

Selon un mode de réalisation de l'invention, le dispositif **DD** comprend en outre des moyens **ME** de focalisation, comprenant par exemple une pluralité de lentilles de préfocalisation pour focaliser une pluralité de faisceaux ultrasonores élémentaires **{F₁, F₂, ..., Fₙ}.** Lesdits faisceaux ultrasonores élémentaires sont émis par les éléments transducteurs **{T₁, T₂**, ...**Tₙ**}, en chacune de la pluralité de positions **{P₁, P₂, ..., Pₘ}.**

Selon un mode de réalisation de l'invention, lesdits moyens **ME** de préfocalisation sont configurés pour former une région focale **{R₁, R₂,** ..., **Rₘ}** sous une surface **S** de la pièce **P.**

La **figure 8** est une vue en perspective d'un transducteur linéaire **TT** utilisé pour mettre en œuvre un mode de réalisation de l'invention. Ledit transducteur linéaire **TT** peut être déplacé dans l'espace et autour de la pièce **P** à l'aide de moyens **MA** de déplacement, par exemple un support mobile ou un bras robotique.

Selon un mode de réalisation de l'invention, les moyens de déplacement **MA** sont configurés pour déplacer le transducteur linéaire **TT** en translation le long de trois axes orthogonaux **X, Y** et **Z** et en rotation autour de trois axes orthogonaux **Aψ, Aθ** et **Aϕ.** On comprendra que les axes orthogonaux **X, Y** et **Z** peuvent correspondre aux directions d'un référentiel **(X, Y, Z)** dont l'origine est située sur le transducteur linéaire **TT.**

Selon un mode de réalisation de l'invention, les trois axes orthogonaux **Aψ, Aθ** et **Aϕ** sont parallèles aux trois axes orthogonaux **X, Y** et **Z.**

Selon un mode de réalisation de l'invention, les moyens de déplacement **MA** peuvent comprendre des moyens de codage en coordonnées cartésiennes, en coordonnées polaires et/ou en coordonnées sphériques.

De manière non limitative, l'homme de métier comprendra que les modes de réalisation de l'invention peuvent également être appliqués dans le domaine médical pour le contrôle d'organes ou de tissus, par exemple des tissus mous, pouvant s'assimiler à une pièce P comprenant une microstructure **M** allongée.

## Revendications

1. Procédé de contrôle non-destructif d'une pièce (P) comprenant une microstructure (M) allongée, ledit procédé comportant les étapes suivantes :
a) déplacement d'un transducteur linéaire (TT) en une pluralité de positions ({P₁, P₂, ..., Pₘ}) situées en regard d'une surface (S) de ladite pièce, ledit transducteur linéaire comprenant une pluralité d'éléments transducteurs ({T₁, T₂, ..., Tₙ}) alignés le long d'une direction principale (O) dudit transducteur linéaire ;
b) émission d'une pluralité de faisceaux ultrasonores élémentaires ({F₁, F₂, ..., Fₙ}), chacun de ladite pluralité de faisceaux ultrasonores élémentaires étant émis par chacun de ladite pluralité d'éléments transducteurs en direction de ladite surface ;
c) mesure d'une pluralité de signaux ({E₁, E₂, ..., Eₘ}) d'écho et d'une pluralité de bruits ({B₁, B₂, ..., Bₘ}) de structure, chacun de ladite pluralité de signaux d'écho et chacun de ladite pluralité de bruits de structure étant mesurés par chacun de ladite pluralité d'éléments transducteurs, chacun desdits signaux d'écho résultant de la rétrodiffusion des faisceaux ultrasonores élémentaires par un défaut (Df) sous la surface de la pièce, et chacun desdits bruits de structure résultant de la rétrodiffusion des faisceaux ultrasonores élémentaires par ladite microstructure allongée ;
d) détermination d'une direction (D) d'allongement de la microstructure allongée lorsqu'une amplitude de l'un parmi la pluralité des bruits de structure mesurés est minimale selon ladite pluralité de positions.

2. Procédé de contrôle selon la revendication 1, où ladite pluralité de faisceaux ultrasonores élémentaires ({F₁, F₂, ..., Fₙ}) émise en chacune de la pluralité de positions ({P₁, P₂, ..., Pₘ}) est focalisée pour former une région focale ({R₁, R₂, ..., Rₘ}).

3. Procédé de contrôle selon la revendication 1 ou 2, où ladite direction (D) d'allongement de la microstructure (M) allongée est déterminée selon une direction parallèle à ladite direction principale (O).

4. Système de contrôle non-destructif d'une pièce (P) comprenant une microstructure (M) allongée, ledit système comportant
- un transducteur linéaire (TT), ledit transducteur linéaire comprenant une pluralité d'éléments transducteurs ({T1, T2, ..., Tn}) alignés le long d'une direction principale (O) dudit transducteur linéaire, chaque élément transducteur de ladite pluralité d'éléments transducteurs étant apte à émettre un faisceau ultrasonore ;
- un dispositif de contrôle comportant :
• des moyens (MA) de déplacement du transducteur linéaire (TT) en une pluralité de positions ({P₁, P₂, ..., Pₘ}) situées en regard d'une surface (S) de ladite pièce ;
• des moyens (MB) d'émission d'une pluralité de faisceaux ultrasonores élémentaires ({F₁, F₂, ..., Fₙ}), chacun de ladite pluralité de faisceaux ultrasonores élémentaires étant émis par chacun de ladite pluralité d'éléments transducteurs en direction de ladite surface ;
• des moyens (MC) de mesure d'une pluralité de signaux ({E₁, E₂,..., Eₘ}) d'écho et d'une pluralité de bruits ({B₁, B₂, ..., Bₘ}) de structure, chacun de ladite pluralité de signaux d'écho et chacun de ladite pluralité de bruits de structure étant mesurés par chacun de ladite pluralité d'éléments transducteurs, chacun desdits signaux d'écho résultant de la rétrodiffusion des faisceaux ultrasonores élémentaires par un défaut (Df) sous la surface de la pièce, et chacun desdits bruits de structure résultant de la rétrodiffusion des faisceaux ultrasonores élémentaires par ladite microstructure allongée ; et
• des moyens (MD) de détermination d'une direction (D) d'allongement de la microstructure allongée lorsqu'une amplitude de l'un parmi la pluralité des bruits de structure mesurés est minimale selon ladite pluralité de positions.

5. Système de contrôle selon la revendication 4, dans lequel chacun de ladite pluralité d'éléments transducteurs ({T₁, T₂, ..., Tₙ}) présente une forme sensiblement rectangulaire comprenant une grande dimension (a) et une petite dimension (b), lesdits éléments transducteurs étant disposés de manière contiguë les uns par rapport aux autres le long de la grande dimension (a).

6. Système de contrôle selon la revendication 4 ou 5, dans lequel lesdits moyens (MB) d'émission comprennent des moyens (ME) de focalisation pour focaliser ladite pluralité de faisceaux ultrasonores élémentaires ({F₁, F₂, ..., Fₙ}) émise en chacune de la pluralité de positions ({P₁, P₂, ..., Pₘ}) pour former une région focale ({R₁, R₂, ..., Rₘ}).

7. Système de contrôle selon la revendication 6, dans lequel chacun de ladite pluralité d'éléments transducteurs ({T₁, T₂, ..., Tₙ}) comprend une lentille de préfocalisation disposée le long de la grande dimension (a).

8. Système de contrôle selon l'une quelconque des revendications précédentes, dans lequel lesdits moyens de déplacement (MA) sont configurés pour déplacer ledit transducteur linéaire (TT) en translation le long de trois axes orthogonaux ({X, Y, Z}) et en rotation autour de trois axes orthogonaux ({Aψ, Aθ, Aϕ}).

9. Système de contrôle selon l'une quelconque des revendications précédentes, dans lequel la fréquence d'émission de chacun de ladite pluralité d'éléments transducteurs est supérieure ou égale à 1 MHz et inférieure ou égale à 20 MHz.

10. Système de contrôle selon l'une quelconque des revendications précédentes, dans lequel le nombre d'éléments transducteurs est choisi parmi : 16, 64, 96, ou 128.

11. Système de contrôle selon l'une quelconque des revendications précédentes, dans lequel la grande dimension (a) et la petite dimension (b) de chacun de ladite pluralité d'éléments transducteurs ({T₁, T₂, ..., Tₙ}) sont égales à 10 mm et à 0.4 mm, respectivement.

## Patentansprüche

1. Verfahren zur zerstörungsfreien Prüfung eines Teils (P), das eine längliche Mikrostruktur (M) umfasst, wobei das Verfahren die folgenden Schritte umfasst:
a) Verschieben eines linearen Wandlers (TT) in eine Vielzahl von Positionen ({P₁, P₂, ..., Pₘ}), die einer Oberfläche (S) des Teils zugewandt sind, wobei der lineare Wandler eine Vielzahl von Wandlerelementen ({T₁, T₂, ..., Tₙ}) umfasst, die entlang einer Hauptrichtung (O) des linearen Wandlers ausgerichtet sind,
b) Emittieren einer Vielzahl von elementaren Ultraschallstrahlen ({F₁, F₂, ..., Fₙ}), wobei jeder der Vielzahl von elementaren Ultraschallstrahlen von jedem der Vielzahl von Wandlerelementen in Richtung der Oberfläche emittiert wird;
c) Messen einer Vielzahl von Echosignalen ({E₁, E₂, ..., Eₘ}) und einer Vielzahl von Körperschallen (B₁, B₂, ..., Bₘ}), wobei jedes der Vielzahl von Echosignalen und jeder der Vielzahl von Körperschallen von jedem der Vielzahl von Wandlerelementen gemessen wird, wobei jedes der Echosignale aus der Rückstreuung der elementaren Ultraschallstrahlen durch einen Defekt (Df) unter der Oberfläche des Teils resultiert, und jeder der Körperschalle aus der Rückstreuung der elementaren Ultraschallstrahlen durch die längliche Mikrostruktur resultiert;
d) Bestimmen einer Richtung (D) der Verlängerung der länglichen Mikrostruktur, wenn eine Amplitude eines aus der Vielzahl der gemessenen Körperschalle an dieser Vielzahl von Positionen minimal ist.

2. Prüfverfahren nach Anspruch 1, wobei die Vielzahl von elementaren Ultraschallstrahlen ({F₁, F₂,..., Fₙ}), die an jeder der Vielzahl von Positionen ({P₁, P₂,..., Pₘ}) emittiert wird, fokussiert wird, um einen Fokalbereich ({R₁, R₂, ..., Rₘ}) zu bilden.

3. Prüfverfahren nach Anspruch 1 oder 2, wobei die Richtung (D) der Verlängerung der länglichen Mikrostruktur (M) entlang einer Richtung parallel zur Hauptrichtung (O) bestimmt wird.

4. System zur zerstörungsfreien Prüfung eines Teils (P), das eine längliche Mikrostruktur (M) umfasst, wobei das System umfasst:
- einen linearen Wandler (TT), wobei der lineare Wandler eine Vielzahl von Wandlerelementen ({T₁, T₂, ..., Tₙ}) umfasst, die entlang einer Hauptrichtung (O) des linearen Wandlers ausgerichtet sind, wobei jedes Wandlerelement der Vielzahl von Wandlerelementen in der Lage ist, einen Ultraschallstrahl auszusenden;
- eine Prüfvorrichtung, die umfasst:
• Mittel (MA) zum Verschieben des linearen Wandlers (TT) zu einer Vielzahl von Positionen ({P₁, P₂, ..., Pₘ}), die der Oberfläche (S) des Teils zugewandt sind;
• Mittel (MB) zum Emittieren einer Vielzahl von elementaren Ultraschallstrahlen ({F₁, F₂, ..., Fₙ}), wobei jeder der Vielzahl von elementaren Ultraschallstrahlen von jedem der Vielzahl von Wandlerelementen in Richtung der Oberfläche emittiert wird;
• Mittel (MC) zum Messen einer Vielzahl von Echosignalen ({E₁, E₂, ..., Eₘ}) und einer Vielzahl von Körperschallen ({B₁, B₂, ..., Bₘ}), wobei jedes der Vielzahl von Echosignalen und jeder der Vielzahl von Körperschallen von jedem der Vielzahl von Wandlerelementen gemessen wird, wobei jedes der Echosignale aus der Rückstreuung der elementaren Ultraschallstrahlen durch einen Defekt (Df) unter der Oberfläche des Teils resultiert, und jeder der Körperschalle aus der Rückstreuung der elementaren Ultraschallstrahlen durch die längliche Mikrostruktur resultiert; und
• Mittel (MD) zum Bestimmen einer Richtung (D) der Verlängerung der länglichen Mikrostruktur, wenn eine Amplitude von eines aus der Vielzahl der gemessenen Körperschalle an der Vielzahl von Positionen minimal ist.

5. Prüfsystem nach Anspruch 4, wobei jedes der Vielzahl von Wandlerelementen ({T₁, T₂, ..., Tₙ}) eine im Wesentlichen rechteckige Form mit einer großen Abmessung (a) und einer kleinen Abmessung (b) aufweist, wobei die Wandlerelemente entlang der großen Abmessung (a) zusammenhängend zueinander angeordnet sind.

6. Prüfsystem nach Anspruch 4 oder 5, wobei die Emissionsmittel (MB) Fokussiermittel (ME) zum Fokussieren der Vielzahl von elementaren Ultraschallstrahlen ({F₁, F₂, ..., Fₙ}) umfassen, die an jeder der Vielzahl von Positionen ({P₁, P₂, ..., Pₘ}) emittiert werden, um einen Fokalbereich ({R₁, R₂, ..., Rₘ}) zu bilden..

7. Prüfsystem nach Anspruch 6, wobei jedes der Vielzahl von Wandlerelementen ({T₁, T₂, ..., Tₙ}) eine entlang der großen Abmessung (a) angeordnete Vorfokussierungslinse umfasst.

8. Prüfsystem nach einem der vorstehenden Ansprüche, wobei die Verschiebemittel (MA) so konfiguriert sind, dass sie den linearen Wandler (TT) translatorisch entlang dreier orthogonaler Achsen ({X, Y, Z}) und rotatorisch um drei orthogonale Achsen ({Aψ, Aθ, Aφ}) verschieben.

9. Prüfsystem nach einem der vorstehenden Ansprüche, wobei die Übertragungsfrequenz jedes der Vielzahl von Wandlerelementen größer als oder gleich 1 MHz und kleiner als oder gleich 20 MHz ist.

10. Prüfsystem nach einem der vorstehenden Ansprüche, wobei die Anzahl der Wandlerelemente ausgewählt ist aus: 16, 64, 96 oder 128.

11. Prüfsystem nach einem der vorstehenden Ansprüche, wobei die große Abmessung (a) und die kleine Abmessung (b) jedes der Vielzahl von Wandlerelementen ({T₁, T₂, ..., Tₙ}) gleich 10 mm bzw. 0,4 mm sind.

## Claims

1. Method for non-destructively testing a part (P) comprising an elongate microstructure (M), said method comprising the following steps:
a) moving a linear transducer (TT) in a plurality of positions ({P₁, P₂, ..., Pₘ}) located facing a surface (S) of said part, said linear transducer comprising a plurality of transducer elements ({T₁, T₂, ..., Tₙ}) aligned along a main direction (O) of said linear transducer;
b) emitting a plurality of elementary ultrasound beams ({F₁, F₂, ..., Fₙ}), each of said plurality of elementary ultrasound beams being emitted by each of said plurality of transducer elements in the direction of said surface;
c) measuring a plurality of echo signals ({E₁, E₂, ..., Eₘ}) and a plurality of structural noises ({B₁, B₂, ... , Bₘ}), each of said plurality of echo signals and each of said plurality of structural noises being measured by each of said plurality of transducer elements, each of said echo signals resulting from the backscatter of elementary ultrasound beams by a defect (Df) under the surface of the part, and each of said structural noises resulting from the backscatter of elementary ultrasound beams by said elongate microstructure;
d) determining a direction (D) of elongation of the elongate microstructure when an amplitude of one from among a plurality of structural noises measured is minimal according to said plurality of positions.

2. Testing method according to claim 1, wherein said plurality of elementary ultrasound beams ({F₁, F₂, ..., Fₙ}) emitted in each of the plurality of positions ({P₁, P₂, ..., Pₘ}) is focalised to form a focal region ({R₁, R₂, ..., Rₘ}).

3. Testing method according to claim 1 or 2, wherein said direction (D) of elongation of the elongate microstructure (M) is determined along a direction parallel to said main direction (O).

4. System for non-destructively testing a part (P) comprising an elongate microstructure (M), said system comprising:
- a linear transducer (TT), said linear transducer comprising a plurality of transducer elements ({T₁, T₂, ..., Tₙ}) aligned along a main direction (O) of said linear transducer, each transducer element of said plurality of transducer elements being capable of emitting an ultrasound beam;
- a testing device comprising:
• displacement means (MA) of the linear transducer (TT) in a plurality of positions ({P₁, P₂, ..., Pₘ}) located facing a surface (S) of said part;
• emission means (MB) of a plurality of elementary ultrasound beams ({F₁, F₂, ..., Fₙ}), each of said plurality of elementary ultrasound beams being emitted by each of said plurality of transducer elements in the direction of said surface;
• measuring means (MC) of a plurality of echo signals ({E₁, E₂, ..., Eₘ}) and a plurality of structural noises ({B₁, B₂, ..., Bₘ}), each of said plurality of echo signals and each of said plurality of structural noises being measured by each of said plurality of transducer elements, each of said echo signals resulting from the backscatter of elementary ultrasound beams by a defect (Df) under the surface of the part, and each of said structural noises resulting from the backscatter of elementary ultrasound beams by said elongate microstructure; and
• means (MD) for determining a direction (D) of elongation of the elongate microstructure when an amplitude of one from among the plurality of structural noises measured is minimal according to said plurality of positions.

5. Testing system according to claim 4, wherein each of said plurality of transducer elements ({T₁, T₂, ... , Tₙ}) has a substantially rectangular shape comprising a large dimension (a) and a small dimension (b), said transducer elements being arranged contiguously against one another along the large dimension (a).

6. Testing system according to claim 4 or 5, wherein said emission means (MB) comprise focalisation means (ME) to focalise said plurality of elementary ultrasound beams ({F₁, F₂, ..., Fₙ}) emitted in each of the plurality of positions ({P₁, P₂, ..., Pₘ}) to form a focal region ({R₁, R₂, ..., Rₘ}).

7. Testing system according to claim 6, wherein each of said plurality of transducer elements ({T₁, T₂, ..., Tₙ}) comprises a prefocalisation lens arranged along the large dimension (a).

8. Testing system according to any one of the preceding claims, wherein said movement means (MA) are configured to move said linear transducer (TT) in translation along three orthogonal axes ({X, Y, Z}) and in rotation about three orthogonal axes ({AΨ, Aθ, Aϕ}).

9. Testing system according to any one of the preceding claims, wherein the frequency of emitting each of said plurality of transducer elements is greater than or equal to 1 MHz and less than or equal to 20 MHz.

10. Testing system according to any one of the preceding claims, wherein the number of transducer elements is selected from among: 16, 64, 96 or 128.

11. Testing system according to any one of the preceding claims, wherein the large dimension (a) and the small dimension (b) of each of said plurality of transducer elements ({T₁, T₂, ..., Tₙ}) are equal to 10 mm and to 0. 4mm, respectively.
